# EUROPEAN PATENT SPECIFICATION

(11) **EP 2 795 099 B1**
(45) Date of publication and mention of the grant of the patent: **13.01.2016**
(21) Application number: 12799231.1
(22) Date of filing: 13.11.2012
(51) Int. Cl.: F16K 17/06, F16K 17/08, F16K 27/02, F02M 63/00, F02M 63/02, F02D 41/38

(54) **A SAFETY VALVE ARRANGEMENT FOR A COMMON RAIL FUEL INJECTION SYSTEM AND A COMMON RAIL FUEL INJECTION SYSTEM**
SICHERHEITSVENTILANORDNUNG FÜR EIN COMMON-RAIL-KRAFTSTOFFEINSPRITZSYSTEM UND COMMON-RAIL-KRAFTSTOFFEINSPRITZSYSTEM
STRUCTURE DE SOUPAPE DE SÛRETÉ POUR SYSTÈME D'INJECTION DE CARBURANT À RAMPE COMMUNE ET SYSTÈME D'INJECTION DE CARBURANT À RAMPE COMMUNE

(30) Priority: 22.12.2011 FI 20116303
(43) Date of publication of application: 29.10.2014
(73) Proprietor: Wärtsilä Finland Oy, 65380 Vaasa (FI)
(72) Inventor: VOUTILAINEN, Vesa, FI-65100 Vaasa (FI)
(74) Representative: Genip Oy
(86) International application number: PCT/FI2012/051102
(87) International publication number: WO 2013/093179

(56) References cited:
- EP-A1- 0 466 081
- EP-A1- 2 233 730
- WO-A1-2004/008010
- DE-U1-202004 004 609
- US-A1- 2002 134 360
- US-B2- 7 234 486

## Description

### Technical field

Invention relates to common rail fuel injection systems of an internal combustion piston engine. Specifically, invention relates to a safety valve arrangement for common rail fuel injection system of an internal combustion engine comprising a pressure accumulator system having a working volume and at least one fuel injector in connection thereto.

### Background art

In known fuel injection systems of so called common rail type for feeding fuel in internal combustion piston engines, there is a risk of over pressure in the rail in malfunction operation. Thus common rail systems require a valve function to limit the pressures used and a valve for depressurizing the system when stopping the engine or in an emergency situation.

In EP 2233730 A1 there is disclosed a safety valve configured to be arranged on a common rail of an internal combustion engine. It comprises a housing, a first chamber and a second chamber arranged within said housing. Said first chamber has an inlet port configured to provide a flow connection between said common rail and said first chamber. A closing element is arranged to close said inlet port as long as a predetermined pressure within the pressurized rail is not exceeded. The second chamber is in flow connection with the first chamber via at least one throttling bore. Said second chamber has an outlet port configured to drain a fluid within the second chamber out of the second chamber. Operation of the valve is highly dependent on the viscosity of the fuel.

In EP 1288490 A1 there is disclosed A control and safety valve arrangement in a fuel feeding system of an internal combustion engine, in which a return flow line is provided with valve means having two separate control arrangements operationally independent of each other so that the pressure accumulator unit can be connected to the fuel tank by means of a first control arrangement under the influence of a separate control pressure when necessary and in addition by means of a second control arrangement if the pressure in the pressure accumulator unit exceeds a certain selected limit value.

DE 19822671 A1 discloses a pressure limiting valve for internal combustion chamber provided with at least one throttle element fitted before and/or after the valve seat in the direction of flow of the fuel. Operation of the valve is highly dependent on the viscosity of the fuel.

US 7234486 B2 discloses a pressure limiting valve for fuel injection devices, particularly for fuel injection devices of internal combustion engines constructed as common-rail systems, comprising a housing with an inlet-side high-pressure connection, a return flow connection and a throttling flow connection situated between them, which has a valve seat on the inlet side and in which, in a springloaded manner in the direction of the closing position and displaceably as a function of the pressure in the opening direction.

The pressure limiting valve is provided for fuel injection devices of internal-combustion engines constructed as common-rail systems comprising a housing with an inlet-side high-pressure connection, a return flow connection and a throttling flow connection situated between them.

Functionally, the admission of pressure, as a result of the pressure existing in the pressure space, causes a displacement of the piston against the spring force acting in the closing direction and the pressure in the pressure space is a function of the throttling connection to the return flow which is opened up by means of the piston movement. Operation of this kind of a pressure limiting valve is highly dependent of the viscosity of the fuel. Thus its operation changes according to properties of the used fuel and more importantly according to the temperature of the fuel. This cases inter alia irregularities in the operational values of the safety valve which is a major drawback.

The aim of the invention is to provide a safety valve arrangement for a common rail fuel injection system of an internal combustion engine by means of which effects of the fuel the viscosity to the pressure relieving operation is minimized.

### Disclosure of the Invention

Objects of the invention are substantially met by a safety valve arrangement for a common rail fuel injection system of an internal combustion engine, which common rail fuel injection system comprises a pressure accumulator system having a working volume and at least one fuel injector in connection thereto, which safety valve arrangement comprises a body having a space with an inlet at its first end and an outlet arranged to a wall of the body, and a piston unit assembled into the space in a spring loaded manner urging the piston unit towards the inlet, and in which the inlet is arranged to be connected to the working volume of the pressure accumulator system and the outlet is arranged to be connected to a low pressure fuel system of the engine, and in which arrangement the piston unit is arranged to move in the space between a first position at which the piston unit closes the inlet and a second position at which the piston unit opens the outlet, wherein an annular cross sectional area is formed by the outer periphery of the piston unit and the inner surface of the space, which annular cross section is equal or greater than the cross sectional area of the inlet at least when the piston unit is at its said second position, in which safety valve arrangement a spring element providing a spring loaded assembly is arranged to provide a first predetermined set load to the piston unit at its length corresponding the inlet closing position of the piston unit against the cross sectional area of the inlet when the piston unit is at its first position, and that the spring element is arranged to provide a second predetermined set load to the piston unit at its length corresponding a third position of the piston unit at which the control surfaces of the piston unit and the body are about to open the outlet. It is characteristic to the invention that the piston unit is operationally connected to a pneumatic actuator unit by means of which the piston unit may be forced to the second position at which the piston unit opens the outlet.

This way the relief of the pressure from the working volume though the safety valve is not at least substantially effected by the viscosity of the fuel and the operation of the safety valve arrangement is reliable.

According to an embodiment of the invention the annular cross sectional area formed by the outer periphery of the piston unit and the inner surface of the space is at its each longitudinal location equal or greater than the cross sectional area of the inlet when the piston unit is at any location between its said third and said second position.

According to an embodiment of the invention the piston unit is provided with a tapered sealing end which is arranged to cooperate with the inlet having a sealing mating surface.

According to another embodiment of the invention the piston unit is provided with a spherical sealing end which is arranged to cooperate with the inlet having a mating surface.

According to an embodiment of the invention the piston unit is provided with a first section having a first outer diameter extending over a first longitudinal distance from the sealing end and second section having a second diameter being greater than the first diameter.

According to an embodiment of the invention the space comprises a cylindrical guiding surface for the piston unit into which a first annular recess is arranged to extend from the inlet over the first longitudinal distance from the inlet.

According to an embodiment of the invention the space comprises a second annular recess arranged to the cylindrical guiding surface communicating with the outlet and providing an annular fuel passage to the outlet.

According to an embodiment of the invention an annular cross sectional area is formed by the outer periphery of the first section of the piston unit and the cylindrical guiding surface between the first and the second annular recesses is equal or greater than the cross sectional area of the inlet.

Objects of the invention are also met by a common rail fuel injection system for an internal combustion engine which comprises a safety valve arrangement according to claim 1.

### Brief Description of Drawings

In the following, the invention will be described with reference to the accompanying exemplary, schematic drawings, in which
- Figure 1 illustrates an internal combustion piston engine according to an embodiment of the invention,
- Figures 2 - 4 illustrates a safety valve arrangement according to an embodiment of the invention at different stages, and
- Figure 5 illustrates a safety valve arrangement according to another embodiment of the invention.

### Detailed Description of Drawings

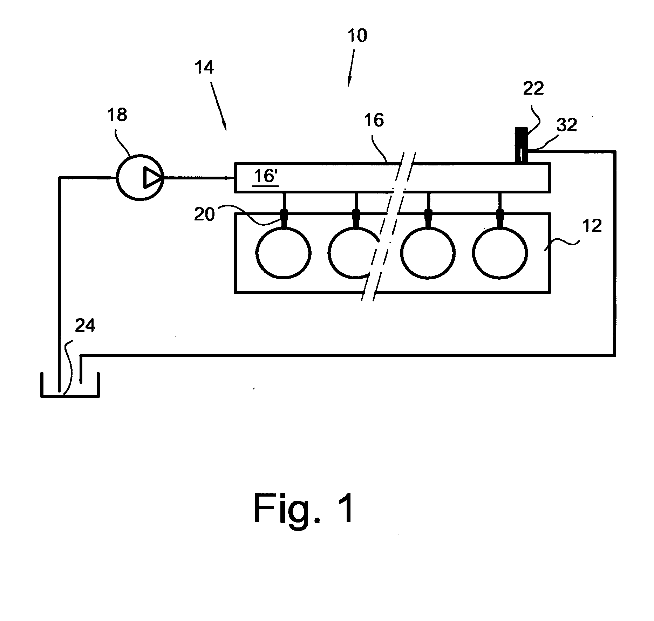

Figure 1 depicts schematically an internal combustion piston engine 10, which is called simply as an engine in the following. The engine comprises a body 12 or a block into which various parts of the engine known as such have been assembled and/or connected. It should be understood that only some elements of the engine are shown being necessary for understanding the invention.

The engine is provided with a common rail fuel injection system 14. The main components of such a system are a pressure accumulator 16, high pressure pump unit 18, fuel injectors 20 and a safety valve arrangement 22. There is a fuel tank or alike 24 with which the high pressure pump unit 18 and the safety valve arrangement are arranged in flow communication.

In normal operation of the engine the high pressure pump unit pressurizes and maintains fuel pressurized in a working volume 16' of the pressure accumulator system 16 at pressure required by the engine e.g. about 2400 bar. Fuel is metered for combustion into the cylinders by each injector 20 independently. The pressure in the pressure accumulator is maintained by specific means adapted for that purpose, of which only the high pressure pump unit is shown here. In case of a malfunction or a disturbance of the operation the pressure in the working volume 16' may increase excessively. In order to avoid any destruction of the components or causing danger to surroundings the common rail fuel injection system is provided with a safety valve arrangement 22. By means of the safety valve arrangement 22 the pressure of the fuel in the pressure accumulator may be relieved by opening a flow path to low pressure part of the fuel system e.g. back to the tank 24 in case the pressure increases too high.

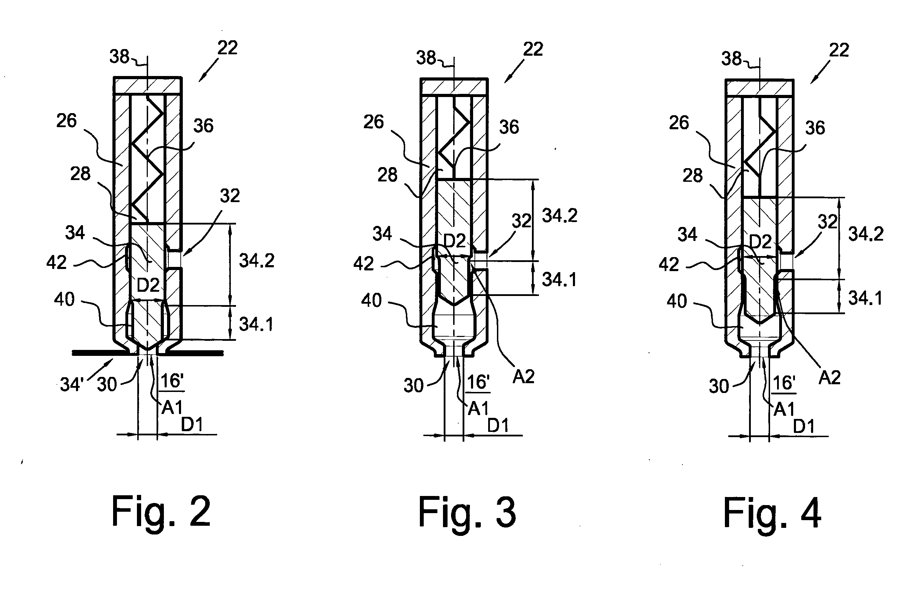

In figures 2 - 3 there is shown a safety valve arrangement 22 according to an embodiment of the invention at its different operational stages.

The safety valve arrangement 22 comprises a body 26, which may be built of several pieces or be of one element. There is an elongated space 28 arranged within the body 26 which is mainly of circular cross section. The space in the body 26 is provided with an inlet 30 at its first end. The inlet 30 is connected to the working volume of the pressure accumulator system 16 when in use. There is also an outlet 32 arranged to a side wall of the body located at a distance along the central axis 38 from the inlet 30, which outlet in turn is arranged to be connected to a low pressure fuel system of the engine. The arrangement further comprises a piston unit 34 assembled into the space 28 with a spring element 36 arranged to urge the piston unit towards the inlet 30. The operational stage of the safety valve arrangement is ruled by means of the position of the piston unit in the space.

The space 28 is arranged longitudinally having a central axis 38 in the body 26. The piston unit 34 is arranged to move in the space between a first position at which the piston unit closes the inlet 30 (shown in figure 2) and a second position at which the piston unit opens the outlet 32 (shown in figure 3). The space comprises a cylindrical inner surface of substantially same diameter as the piston unit for guiding the movement of piston unit along the central axis 38 of the space.

The space is additionally provided with a first annular recess 40 arranged to extend from the inlet 30 over the first longitudinal distance from the inlet in the direction of the central axis 38. Further the space comprises a second annular recess 42 arranged to the cylindrical guiding surface communicating with the outlet 32 and providing an annular fuel passage in connection with the outlet.

The piston unit is provided with a tapered or spherical sealing end 34' which is arranged to cooperate with the inlet 30 in the body having a sealing mating surface against which the piston unit may be pressed. The first position illustrates normal operating circumstance. The pressure in the working volume 16' effects on the first area A1 defined by circular cross section of the inlet 30 having a diameter D1.

As can be seen from the figures the piston unit is provided with a first section 34.1 having a first outer diameter extending over a first longitudinal distance from the sealing end 34' of the piston unit. The piston unit is also provided with a second section 34.2 having a second diameter being greater than the first diameter. In the area of the first longitudinal distance from the sealing end 34' of the piston unit the piston unit and/or the space are so arranged that there is an annular cross sectional area formed between the outer periphery of the piston unit and the inner surface of the space, The annular cross section is at its each longitudinal location i.e. in the direction of the central axis 38 equal or greater than the cross sectional area A1 of the inlet at least when the piston unit is at its second position. This way the relief of the pressure from the working volume 16' is not at least substantially effected by the viscosity of the fuel and the operation of the safety valve arrangement is more reliable. Thus the annular cross sectional area is formed by making use of the reduced diameter of the first section of the piston unit 34.

The spring element 36 is arranged to provide a first predetermined set load to the piston unit 34 at the length of the spring element corresponding the inlet closing position of the piston unit. As an example the first predetermined set load corresponds to pressure 2300 - 2500 bar, in which case the load is 1600 - 1800 N with diameter D1 of the inlet 30 being 3 mm.

In case the pressure increases so that the load to the spring element exceeds the first set load the piston unit 34 lifts all the way up to the second position (Fig. 3) and the fuel may enter into the space defined by the first section 34.1 of the piston unit and the first annular recess 40. In this case the pressure in the working volume 16' effects on a second area A2 defined by circular cross section of the second section 34.2 of the piston unit having a diameter D2. Preferably A2 is more than 3x A1, thus the force subjected to the piston unit is threefold compared to position when in the first position, moving the piston unit substantially instantly to the second position at which the piston unit opens the outlet 32 (shown in figure 3).

The spring element 36 is arranged to provide a first predetermined set load to the piston unit at its length corresponding the inlet closing position (the first position, Fig. 2) of the piston unit against the cross sectional area A1 of the inlet. Additionally the spring element is arranged to provide a second predetermined set load to the piston unit against the cross sectional area A2 at its length corresponding a third position of the piston unit at which the control surfaces of the piston unit and the body are about to open the outlet 32. This position is shown in the figure 4.

As an example the second predetermined set load corresponds to pressure 1000 - 1200 bar in the working volume 16', in which case the load is 2290 - 2750 N with diameter D2 being about 5,4 mm. This way according to an embodiment of the invention the fuel system is operated so that after an increase of the pressure in the working space above a level causing a force to the piston being more than the first set load, the piston moves instantly to the second position relieving the pressure in the working volume. After the pressure in the working volume has decreased to or below a pressure level causing a force to the piston being no more than the second set load the safety valve closes the outlet 32. The pressure in the working volume is maintained at a level which causes a force to the piston against the cross sectional area A2 being no more than the second set load. This way it is possible to still operate the engine safely by utilizing fuel injection pressure lower than normally but still adequate to keep the engine running.

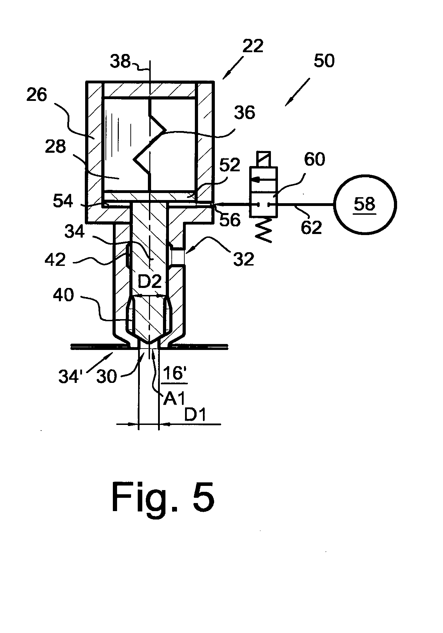

Figure 5 shows a further embodiment of the invention in which the piston unit 34 is operationally connected to an actuator unit 50 by means of which the piston unit 34 may be forced to the second position at which the piston unit opens the outlet 32. The actuator unit 50 is in this embodiment pneumatically operated comprising a piston 52 arranged in connection with the piston unit forming a space 54 into which pressurized gas may be fed via an inlet 56. When pressurized gas is fed into the space a force against the force of the spring element 36 is generated moving the piston unit to the second position opening the outlet 32. In other word the force of gas operated unit 50 is such that it pushes piston unit to the second position thus overcoming force created by spring. Thus with the gas the valve arrangement may be kept open so that rail pressure can drop to zero.

The actuator unit comprises a source of pressurized gas 58 and a control valve 60 in the gas conduit 62 between the source of pressurized gas 58 and the inlet 56. Preferably the gas is air.

By making use of this embodiment it is possible to stop the engine by cutting the fuel feed very quickly for example in a case of emergency or any other reason.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such a combination is technically feasible.

## Claims

1. A safety valve arrangement (22) for a common rail fuel injection system of an internal combustion engine (10) comprising a pressure accumulator system having a working volume and at least one fuel injector in connection thereto, which safety valve arrangement comprises a body (26) having a space (28) with an inlet (30) at its first end and an outlet (32) arranged to a wall of the body, and a piston unit (34) arranged into the space in a spring loaded manner urging the piston unit towards the inlet, and in which the inlet is arranged to be connected to the working volume (16') of the pressure accumulator system and the outlet is arranged to be connected to a low pressure fuel system (24) of the engine, and in which arrangement the piston unit is arranged to move in the space between a first position at which the piston unit closes the inlet (30) and a second position at which the piston unit opens the outlet (32), wherein an annular cross sectional area is formed by the outer periphery of the piston unit (34) and the inner surface of the space (28), which annular cross section is equal or greater than the cross sectional area of the inlet (30) at least when the piston unit is at its said second position, in which safety valve arrangement a spring element (36) providing the spring loaded assembly is arranged to provide a first predetermined set load to the piston unit (34) at its length corresponding the inlet closing position of the piston unit against the cross sectional area of the inlet when the piston unit is at its first position, and that the spring element (36) is arranged to provide a second predetermined set load to the piston unit (34) at its length corresponding a third position of the piston unit at which the control surfaces of the piston unit and the body are about to open the outlet, **characterized in that** the piston unit (34) is operationally connected to a pneumatic actuator unit (50) by means of which the piston unit (34) may be forced to the second position at which the piston unit opens the outlet (32).

2. A safety valve arrangement according to claim 1, **characterized in that** the annular cross sectional area formed by the outer periphery of the piston unit (34) and the inner surface of the space is at its each longitudinal location equal or greater than the cross sectional area of the inlet when the piston unit is at any location between its third and second position.

3. A safety valve arrangement according to claim 1, **characterized in that** the piston unit is provided with a tapered or spherical sealing end (34') which is arranged to cooperate with the inlet (30) having a sealing mating surface.

4. A safety valve arrangement according to claim 1 or 3, **characterized in that** the piston unit is provided with a first section (34.1) having a first outer diameter extending over a first longitudinal distance from the sealing end and second section (34.2) having a second diameter being greater than the first diameter.

5. A safety valve arrangement according to claim 4, **characterized in that** the space comprises a cylindrical guiding surface for the piston unit into which a first annular recess (40) is arranged to extend from the inlet over the first longitudinal distance from the inlet.

6. A safety valve arrangement according to claim 5, **characterized in that** the space comprises a second annular recess (42) arranged to the cylindrical guiding surface communicating with the outlet and providing an annular fuel passage to the outlet.

7. A safety valve arrangement according to claim 6, **characterized in that** an annular cross sectional area is formed by the outer periphery of the first section (34.1) of the piston unit and the cylindrical guiding surface between the first and the second annular recesses (40, 42) is equal or greater than the cross sectional area of the inlet.

8. A common rail fuel injection system for an internal combustion engine, **characterized in that** it comprises a safety valve arrangement according to anyone of the preceding claims.

## Patentansprüche

1. Sicherheitsventilanordnung (22) für ein Kraftstoff-Speichereinspritzsystem einer Verbrennungskraftmaschine (10), das ein Drucksammlersystem, das ein Arbeitsvolumen hat, und wenigstens eine KraftstoffEinspritzvorrichtung in Verbindung mit demselben umfasst, wobei die Sicherheitsventilanordnung ein Gehäuse (26), das einen Raum (28) mit einem Einlass (30) an seinem ersten Ende und einem Auslass (32), der an einer Wand des Gehäuses angeordnet ist, hat, und eine Kolbeneinheit (34), die in dem Raum auf eine federgespannte Weise angeordnet ist, was die Kolbeneinheit zu dem Einlass hin drängt, und worin der Einlass so angeordnet ist, dass er mit dem Arbeitsvolumen (16') des Drucksammlersystems verbunden wird, und der Auslass so angeordnet ist, dass er mit einem Niederdruck-Kraftstoffsystem (24) der Kraftmaschine Verbunden wird, und wobei in dieser Anordnung die Kolbeneinheit dafür angeordnet ist, sich in dem Raum zwischen einer ersten Stellung, bei der die Kolbeneinheit den Einlass (30) schließt, und einer zweiten Stellung, bei der die Kolbeneinheit den Auslass (32) öffnet, zu bewegen, wobei eine ringförmige Querschnittsfläche durch den Außenumfang der Kolbeneinheit (34) und die Innenfläche des Raums (28) gebildet wird, wobei der ringförmige Querschnitt gleich der Querschnittsfläche des Einlasses (30) oder größer als dieselbe ist, wenigstens, wenn sich die Kolbeneinheit an ihrer zweiten Stellung befindet, wobei in der Sicherheitsventilanordnung ein Federelement (36), das die federgespannte Baugruppe bereitstellt, dafür angeordnet ist, bei seiner Länge, die der Einlass-Schließstellung der Kolbeneinheit gegenüber der Querschnittsfläche des Einlasses entspricht, eine erste vorbestimmte Einstelllast auf die Kolbeneinheit (34) bereitzustellen, wenn sich die Kolbeneinheit bei ihrer ersten Stellung befindet, und das Federelement (36) dafür angeordnet ist, bei seiner Länge, die einer dritten Stellung der Kolbeneinheit entspricht, bei der die Steuerflächen der Kolbeneinheit und des Gehäuses im Begriff sind, den Auslass zu öffnen, eine zweite vorbestimmte Einstelllast auf die Kolbeneinheit (34) bereitzustellen, **dadurch gekennzeichnet, dass** die Kolbeneinheit (34) wirksam mit einer pneumatischen Stellantriebseinheit (50) verbunden ist, mit deren Hilfe die Kolbeneinheit (34) zu der zweiten Stellung getrieben werden kann, bei der die Kolbeneinheit den Auslass (32) öffnet.

2. Sicherheitsventilanordnung nach Anspruch 1, **dadurch gekennzeichnet, dass** die durch den Außenumfang der Kolbeneinheit (34) und die Innenfläche des Raums gebildete ringförmige Querschnittsfläche an jeder ihrer Längspositionen gleich der Querschnittsfläche des Einlasses oder größer als dieselbe ist, wenn sich die Kolbeneinheit an einer beliebigen Position zwischen ihrer dritten und zweiten Stellung befindet.

3. Sicherheitsventilanordnung nach Anspruch 1, **dadurch gekennzeichnet, dass** die Kolbeneinheit mit einem verjüngten oder sphärischen Abdichtungsende (34') versehen ist, das dafür angeordnet ist, mit dem Einlass (30) zusammenzuwirken, der eine abdichtende Passfläche hat.

4. Sicherheitsventilanordnung nach Anspruch 1 oder 3, **dadurch gekennzeichnet, dass** die Kolbeneinheit mit einer ersten Sektion (34.1), die einen ersten Außendurchmesser hat, die sich über eine erste Längsentfernung von dem Abdichtungsende aus erstreckt, und einer zweiten Sektion (34.2), die einen zweiten Außendurchmesser, der größer ist als der erste Außendurchmesser, hat, versehen ist.

5. Sicherheitsventilanordnung nach Anspruch 4, **dadurch gekennzeichnet, dass** der Raum eine zylindrische Führungsfläche für die Kolbeneinheit umfasst, in der eine erste ringförmige Aussparung (40) angeordnet ist, so dass sie sich von dem Einlass aus über die erste Längsentfernung von dem Einlass aus erstreckt.

6. Sicherheitsventilanordnung nach Anspruch 5, **dadurch gekennzeichnet, dass** der Raum eine an der zylindrischen Führungsfläche angeordnete zweite ringförmige Aussparung (42) umfasst, die mit dem Auslass in Verbindung steht und einen ringförmigen Kraftstoffdurchgang zu dem Auslass bereitstellt.

7. Sicherheitsventilanordnung nach Anspruch 6, **dadurch gekennzeichnet, dass** eine ringförmige Querschnittsfläche, die durch den Außenumfang der ersten Sektion (34.1) der Kolbeneinheit und die zylindrische Führungsfläche zwischen der ersten und der zweiten ringförmigen Aussparung (40, 42) gebildet wird, gleich der Querschnittsfläche des Einlasses oder größer als dieselbe ist.

8. Kraftstoff-Speichereinspritzsystem für eine Verbrennungskraftmaschine, **dadurch gekennzeichnet, dass** es eine Sicherheitsventilanordnung nach einem der vorhergehenden Ansprüche umfasst.

## Revendications

1. Agencement de soupape de sûreté (22) pour un système d'injection de carburant de rampe commune d'un moteur à combustion interne (10) comprenant un système accumulateur de pression ayant un volume de fonctionnement et au moins un injecteur de carburant en raccord avec celui-ci, lequel agencement de soupape de sûreté comprend un corps (26) ayant un espace (28) avec une entrée (30) à sa première extrémité et une sortie (32) disposée sur une paroi du corps et une unité de piston (34) disposée dans l'espace d'une manière présentant une charge de ressort forçant l'unité de piston vers l'entrée et dans lequel l'entrée est agencée pour être raccordée au volume de fonctionnement (16') du système accumulateur de pression et la sortie est agencée pour être raccordée à un système de carburant à basse pression (24) du moteur et agencement dans lequel, l'unité de piston est agencée pour se déplacer dans l'espace situé entre une première position à laquelle l'unité de piston ferme l'entrée (30) et une deuxième position à laquelle l'unité de piston ouvre la sortie (32), dans lequel une zone de section transversale annulaire est formée par la périphérie extérieure de l'unité de piston (34) et la surface intérieure de l'espace (28),laquelle section transversale annulaire est égale ou plus grande que la zone de section transversale de l'entrée (30) au moins lorsque l'unité de piston est dans sa dite deuxième position, agencement de soupape de sûreté dans lequel un élément de ressort (36) fournissant l'ensemble à ressort est agencé pour fournir une première charge définie prédéterminée à l'unité de piston (34) à sa longueur correspondant à la position de fermeture d'entrée de l'unité de piston contre la zone de section transversale de l'entrée lorsque l'unité de piston est dans sa première position, et que l'élément de ressort (36) est agencé pour fournir une deuxième charge définie prédéterminée à l'unité de piston (34) à sa longueur correspondant à une troisième position de l'unité de piston à laquelle les surfaces de commande de l'unité de piston et du corps sont proches d'ouvrir la sortie **caractérisé en ce que** l'unité de piston (34) est raccordée de façon opérationnelle à une unité d'actionneur pneumatique (50) au moyen de laquelle l'unité de piston (34) peut être forcée à la deuxième position à laquelle l'unité de piston ouvre la sortie (32).

2. Agencement de soupape de sûreté selon la revendication 1, **caractérisé en ce que** la zone de section transversale annulaire formée par la périphérie extérieure de l'unité de piston (34) et la surface intérieure de l'espace est à chacun de ses emplacements longitudinaux égale ou plus grande que la zone de section transversale de l'entrée lorsque l'unité de piston est à n'importe quel emplacement entre sa troisième et deuxième position.

3. Agencement de soupape de sûreté selon la revendication 1, **caractérisé en ce que** l'unité de piston est dotée d'une extrémité d'étanchéité conique ou sphérique (34') qui est agencée pour coopérer avec l'entrée (30) ayant une surface de jointement d'étanchéité.

4. Agencement de soupape de sûreté selon la revendication 1 ou 3, **caractérisé en ce que** l'unité de piston est dotée d'une première section (34.1) ayant un premier diamètre extérieur s'étendant sur une première distance longitudinale depuis l'extrémité d'étanchéité et une deuxième section (34.2) ayant un deuxième diamètre étant plus grand que le premier diamètre.

5. Agencement de soupape de sûreté selon la revendication 4, **caractérisé en ce que** l'espace comprend une surface de guidage cylindrique pour l'unité de piston dans laquelle un premier évidement annulaire (40) est agencé pour s'étendre depuis l'entrée sur la première distance longitudinale depuis l'entrée.

6. Agencement de soupape de sûreté selon la revendication 5, **caractérisé en ce que** l'espace comprend un deuxième évidement annulaire (42) agencé à la surface de guidage cylindrique communiquant avec la sortie et fournissant un passage annulaire de carburant vers la sortie.

7. Agencement de soupape de sûreté selon la revendication 6, **caractérisé en ce qu'**une zone de section transversale annulaire est formée par la périphérie extérieure de la première section (34.1) de l'unité de piston et la surface de guidage cylindrique entre les premier et deuxième évidements annulaires (40, 42) est égale ou plus grande que la zone de section transversale de l'entrée.

8. Système d'injection de carburant de rampe commune pour un moteur à combustion interne, **caractérisé en ce qu'**il comprend un agencement de soupape de sûreté selon l'une quelconque des revendications précédentes.
